# EUROPÄISCHE PATENTSCHRIFT

(11) **EP 0 957 130 B1**
(45) Veröffentlichungstag und Bekanntmachung des Hinweises auf die Patenterteilung: **21.12.2005**
(21) Anmeldenummer: 99108598.6
(22) Anmeldetag: 07.05.1999
(51) Int. Cl.: C08L 75/04

(54) **Verfahren zur Herstellung von Polyisocyanat-Polyadditionsprodukten**
Process for the preparation of polyisocyanate-polyaddition products
Procédé pour la préparation de produits de polyisocyanate-polyaddition

(30) Priorität: 09.05.1998 DE 19820917; 10.11.1998 DE 19851880
(43) Veröffentlichungstag der Anmeldung: 17.11.1999
(73) Patentinhaber: BASF Aktiengesellschaft, 67056 Ludwigshafen (DE)
(72) Erfinder: Scherzer, Dietrich, Dr., 67433 Neustadt (DE); Treuling, Ulrich, Dr., 64625 Bensheim (DE); Kreyenschmidt, Martin, Dr., 67551 Worms (DE); Kappes, Anton, 82140 Olching (DE); Pittrich, Klaus, 82211 Herrsching (DE)
(74) Vertreter: Isenbruck, Günter

(56) Entgegenhaltungen:
- EP-A- 0 379 149
- EP-A- 0 655 488
- WO-A-92/22595
- FR-A- 2 171 150
- DATABASE WPI Week 9534 Derwent Publications Ltd., London, GB; AN 260228 XP002110749 "new zinc plated steel plate for bodies of office instruments" & JP 07 163940 A (NKK )

## Beschreibung

Die Erfindung betrifft Verfahren zur Herstellung von Polyisocyanat-Polyadditionsprodukten durch Umsetzung von Isocyanaten mit gegenüber Isocyanaten reaktiven Verbindungen in Gegenwart von Treibmitteln und ggf. Katalysatoren, Hilfsmitteln und/oder Zusatzstoffen sowie Polyisocyanat-Polyadditionsprodukte, die nach diesem Verfahren herstellbar sind. Des weiteren bezieht sich die Erfindung auf die Verwendung von thermoplastischen Teilchen mit einer Größe von 2-100 µm und einem Schmelzpunkt in einem Bereich von 50 bis 300 °C zur Herstellung von üblicherweise geschäumten Polyisocyanat-Polyadditionsprodukten, die beim Zersägen eine stark verminderte Staubbildung aufweisen.

Ferner betrifft die Erfindung ein Verfahren zur Herstellung eines abriebarmen Polyisocyanat-Polyadditionsprodukts, insbesondere deren geschäumte Elastomere, durch Umsetzung von Isocyanat-Komponenten mit Komponenten aus gegenüber Isocyanaten reaktiven Verbindungen gegebenenfalls in Gegenwart von Treibmitteln, Katalysatoren, Hilfsmitteln und/oder Zusatzstoffen sowie Polyisocyanat-Polyadditionsprodukte, die nach diesem Verfahren herstellbar sind. Weiterhin betrifft die Erfindung abriebarme Massen, lagerstabile Komponenten, ein Verfahren zur Einstellung von bestimmten Eigenschaften in Polyisocyanat-Polyadditionsprodukten oder Massen sowie die Verwendung von Polyisocyanat-Polyadditionsprodukten bzw. Massen zur Verbesserung des Abriebverhaltens sowie Gebilde, die mindestens einen der vorgenannten Stoffe beinhalten.

Die Herstellung von Polyisocyanat-Polyadditionsprodukten, üblicherweise Polyurethan- und gegebenenfalls Polyisocyanuratprodukten, beispielsweise Polyurethanschaumstoffen und geschäumte Elastomere, durch Umsetzung von einer Isocyanat-Komponente B mit einer Komponente A aus gegenüber Isocyanaten reaktiven Verbindungen in Gegenwart von Treibmitteln und ggf. Katalysatoren, Hilfsmitteln und/oder Zusatzstoffen ist vielfach beschrieben worden.

Bei der weiteren Verarbeitung beispielsweise von Polyurethanschaumstoffen, insbesondere Polyurethanhartschaumstoffen, die gegebenenfalls Polyisocyanuratstrukturen aufweisen können, kommt es bei einem Zersägen oder Heizdrahtschneiden der Formkörper zu einer unerwünschten Staubbildung und einer rauhen Oberfläche.

Der vorliegenden Erfindung lag daher die Aufgabe zugrunde, ein Verfahren zur Herstellung von geschäumten Polyisocyanat-Polyadditionsprodukten durch Umsetzung von Isocyanaten mit gegenüber Isocyanaten reaktiven Verbindungen gegebenenfalls in Gegenwart von Treibmitteln, Katalysatoren, Hilfsmitteln und/oder Zusatzstoffen zu entwickeln, mit dem Polyisocyanat-Polyadditionsprodukte erhältlich sind, die bei einer weiteren Verarbeitung unter örtlicher Wärmeeinwirkung, beispielsweise einem Zersägen mit Erzeugung von Reibungswärme oder insbesondere einem Heizdrahtschneiden, eine stark verminderte Staubbildung und anschließend eine angenehm glatte Oberfläche aufweisen.

Diese Aufgabe wurde erfindungsgemäß dadurch gelöst, daß man die Umsetzung von Isocyanaten mit gegenüber Isocyanaten reaktiven Verbindungen gegebenenfalls in Gegenwart von Treibmitteln, Katalysatoren, Hilfsmitteln und/oder Zusatzstoffen, in Gegenwart von Teilchen (i) mit einer Größe von 2 bis 100µm, insbesondere 10 bis 100 µm die einen Schmelzpunkt in einem Bereich von 50 bis 300 °C, bevorzugt 70 bis 200 °C, aufweisen aus Polyolefinen, ausgewählt aus der Gruppe bestehend aus Polyethylen, Polypropylen, sowie deren Copolymeren mit Maleinsäure und/oder Vinylacetat und/oder Wachsen durchführt.

Als Teilchen (i) werden die folgenden Polyolefine, Polyolefincopolymere und/oder Wachse eingesetzt: Polyethylen, Polypropylen, Polyolefine enthaltend Polyethylen- und Polypropyleneinheiten, die mit Maleinsäure und/oder Vinylacetat copolymerisiert wurden, beispielsweise EVA, Fischer-Tropsch-Wachse (Syntheseparafin), Montanwachse, Carnaubawachs, Candillawachs, pflanzliche und/oder tierische Wachse, z.B. Ester von Fettsäuren mit 20 bis 53 Kohlenstoffatomen, die mit 1 bis 5 Hydroxylgruppen aufweisenden organischen Alkoholen, beispielsweise Glycerin, verestert sind.

Bevorzugt werden Polyolefine, die gegebenenfalls modifiziert sein können und/oder Wachse eingesetzt.

Entsprechende Wachse sind im Handel erhältlich, beispielsweise mikronisiertes Polyethylenwachs (AF-31 Wachs) bei der BASF Aktiengesellschaft.

Unter der Größe der Teilchen (i) ist der Durchmesser der Teilchen (i) zu verstehen, den die Teilchen (i) hätten, wenn sie mit ihrem entsprechenden Volumen in Form einer Kugel vorlägen.

Ein weiterhin häufig beanstandetes Problem bei Schäumen, insbesondere Schuhsohlen, die zumindest zum Teil aus Polyisocyanat-Polyadditionsprodukten, insbesondere Polyurethanen, bestehen, ist ein zu hoher Abrieb.

Bisher wurde dieser Abrieb im Fall von Schuhsohlen dadurch verringert, indem Silikonkautschuk den Polyisocyanat-Polyadditionsprodukten oder Polyurethanen zugesetzt wurde.

Der Einsatz des Silikonkautschukes ist jedoch nachteilhaft, da dieser sich nur sehr geringfügig und unter hohem technischen Aufwand mit gegenüber Isocyanaten reaktiven Verbindungen (Komponente A) mischen läßt. Diese schlechte Mischbarkeit führt beispielsweise dazu, daß der Silikonkautschuk und die Komponente A sehr schnell der Phasenseparation unterliegen. Dieses führt beispielsweise zu dem Problem, daß die Mischung aus Komponente A und Silikonkautschuk nicht über längere Zeit gelagert oder über weiter Strecken transportiert werden kann. In der Regel ist aufgrund der auftretenden Phasenseparation notwendig, daß die Silikonkautschuk enthaltende Komponente A unmittelbar vor der Herstellung des Polyisocyanat-Polyadditionsaddukts erneut zur ausreichenden Vermischung des Silikonkautschukes mit der Komponente A gerührt werden muß.

Ferner führt die Zugabe von Silikonkautschuken nur zu einer scheinbaren Verbesserung des Abriebverhaltens. Die mit Silikonkautschuk modifizierten Materialien erzeugen auf der Oberfläche des an der Oberfläche dieses Materials entlang reibenden Gegenstandes eine wachsartige Schicht. Diese Schicht erlaubt ein besseres Aneinandervorbeigleiten. So wird beispielsweise die Oberfläche von Schmirgelpapier zugewachst, wenn das mit einem Silikonkautschuk modifizierte Material über das Schmirgelpapier gerieben wird. Die auf dem Schmirgelpapier entstehende wachsartige Schicht nimmt der Oberfläche des Schmirgelpapiers seine Rauheit und erlaubt somit ein besseres Aneinandervorbeigleiten der Oberfläche des Schmirgelpapiers und der Oberfläche des mit Silikonkautschuk modifizierten Materials. Zudem handelt es sich bei den Silikonkautschuken um ein vergleichsweise teures Material.

Der vorliegenden Erfindung lag daher ferner die Aufgabe zugrunde, die zuvor genannten mit dem Silikonkautschuk verbundenen Nachteile zu überwinden und insbesondere ein abriebarmes geschäumtes Polyisocyanat-Polyadditionsprodukt bzw. eine abriebarme geschäumte Masse und eine lagerstabile, insbesondere weniger zur Phasenseparation neigende, Komponente zur Verfügung zu stellen.

Ferner ist es erfindungsgemäß bevorzugt, daß das Polyadditionsprodukt eine Abriebmenge von unter 250 mg nach DIN 53516 aufweist. Dazu enthält das Polyadditionsprodukt vorzugsweise duroplastische Teilchen (ii), zusammen mit den bereits oben definierten Teilchen (i). Diese Polyadditionsprodukte werden nachfolgend als "abriebarme" Polyisocyanat-Polyadditionsprodukte bezeichnet.

Erfindungsgemäß wird unter duroplastisch verstanden, daß Materialien mit diesen Eigenschaften nicht schmelzbar sind. Als duroplastische Teile kommen erfindungsgemäß einerseits Polymere und andererseits anorganische Materialien in Betracht. Bei den Polymeren ist es bevorzugt, daß diese vernetzt vorliegen. Besonders bevorzugt sind als Polymere Polykondensate, beispielsweise Bakelite, Polyamide, Polyimide und dergleichen. Anorganische Duroplaste sind vorzugsweise Mineralische Materialien. Hierunter sind insbesondere die nachfolgend in dieser Anmeldung beschriebenen Füllstoffe bevorzugt.

Die duroplastischen Teilchen (ii) weisen vorzugsweise die gleiche Größe wie die Teilchen (i) auf, wobei deren Größe ebenfalls gleich definiert ist.

Weiterhin wurden die vorgenannten Aufgaben erfindungsgemäß durch eine abriebarme Masse, beinhaltend mindestens ein erfindungsgemäßes Polyisocyanat-Polyadditionsprodukt oder mindestens eine erfindungsgemäße geschäumten oder kompakten Elastomeren oder mindestens zwei davon gelöst.

Ferner wurde zur Lösung der erfindungsgemäßen Aufgaben eine lagerstabile, gegenüber Isocyanaten reaktive Verbindungen enthaltende Komponente A, die mindestens ein Teilchen (i) und ggf. (ii) beinhaltet, zur Verfügung gestellt. In einer anderen erfindungsgemäßen Ausführungsform können die Teilchen (i) und ggf. (ii) jedoch auch in der Komponente B enthalten sein, wodurch diese gleichfalls gegenüber der mit Silikonkautschuken versetzten an Lagerstabilität gewinnt. Somit kann durch die Teilchen (i) und ggf. (ii) die Lagerstabilität der eingesetzten Komponenten erhöht werden.

Die erfindungsgemäßen abriebarmen Massen beinhalten mindestens ein Polyisocyanatadditionsprodukt oder mindestens ein geschäumtes oder kompaktes Elastomeres oder mindestens zwei davon als Bestandteile in einer Menge im Bereich von 0,1 bis 100, bevorzugt von 1 bis 30 und besonders bevorzugt von 1,1 bis 8 Gew.-%, bezogen auf die abriebarme Masse.

Es ist erfindungsgemäß bevorzugt, daß das Gewichtsverhältnis der gegenüber Isocyanaten reaktiven Verbindungen zu den Teilchen (i) und ggf. (ii) 5:1 bis 300:1, bevorzugt 5:1 bis 200:1 und besonders bevorzugt 5:1 bis 100:1 und darüber hinaus bevorzugt 5:1 bis 20:1 beträgt.

Die abriebarme Masse kann neben den zuvor genannten Bestandteilen als weitere Bestandteile alle dem Fachmann bekannten Polymere; Zusatzstoffe und Hilfsmittel enthalten.

Es ist erfindungsgemäß bevorzugt, daß die Polyisocyanat-Polyadditionsprodukte, insbesondere die kompakten oder geschäumten Elastomere, sowie die durch das erfindungsgemäße Verfahren erhältliche abriebarme Masse mindestens eine der folgenden Eigenschaften aufweist: Shorehärte A im Bereich von 10 bis 90, bevorzugt von 30 bis 80 und besonders bevorzugt von 40 bis 70, oder Shorehärte D im Bereich von 10 bis 60, bevorzugt 20 bis 50 und besonders bevorzugt 30 bis 40. Dauerbiegebelastung im Bereich von 1 bis 8, bevorzugt von 2 bis 7; Abriebmenge nach DIN 53516 unter 250 mg, bevorzugt unter 150 mg und besonders bevorzugt unter 100 mg. Besonders bevorzugt ist es, daß die kompakten oder geschäumten Elastomere oder die abriebarmen Massen die zuvor angegebenen Shorehärtebereiche und Abriebmengen aufweisen. Darüber hinaus bevorzugt sind kompakte oder geschäumte Elastomere sowie abriebarme Massen, die die zuvor angegebenen Shorehärtebereiche, Dauerbiegebelastungsbereiche und Abriebmengen aufweisen.

Es ist erfindungsgemäß besonders bevorzugt, daß die kompakten Elastomere für sich oder in Kombination mit den anderen Eigenschaften eine Shorehärte D in den oben stehenden Bereichen aufweisen. Die Shorehärte D wird gemäß DIN 53505 bestimmt.

Weiterhin ist in einer erfindungsgemäßen Ausführungsform das abriebarme Polyisocyanat-Polyadditionsprodukte bevorzugt, das von 0,1 bis 10, bevorzugt von 0,5 bis 9 und besonders von 1 bis 5 Gew.-%, jeweils bezogen auf das Polyisocyanat-Polyadditionsprodukte, mindestens eines der Teilchen (i) und ggf. (ii) enthält.

Die Lagestabilität der mindestens eine Menge eines Teilchen (1) und ggf. (ii) enthaltenden Komponente beträgt mindestens 3, bevorzugt mindestens 5 und besonders bevorzugt mindestens 14 Tage.

Um die Phasenseparationstendenz darüber hinaus abzuschwächen, werden vorzugsweise Emulgatoren bzw. Hilfsstoffe, wie sie in EP A 0 368 217 beschrieben sind, eingesetzt.

Die Lagerstabilität der Komponenten ist dann gegeben, wenn keine Phasenseparation der übrigen Komponenten und den Teilchen (i) und ggf. (ii) einsetzt, die eine inhomogene Verteilung der Teilchen (i) und/oder (ii) in der Komponente zur Folge hat.

Die weiteren Ausgangsstoffen in dem erfindungsgemäßen Verfahren werden im Folgenden beispielhaft beschrieben:

Als Isocyanate kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder iscyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat, 4,4'-, 2,4'-und/oder 2,2'-Diphenylmethandiisocyanat, Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden.

Als gegenüber Isocyanaten reaktive Verbindungen können zweckmäßigerweise solche mit einer Funktionalität von 2 bis 8, vorzugsweise 2 bis 6, und einem Molekulargewicht von 60 bis 10000 verwendet werden, die als gegenüber Isocyanaten reaktive Gruppen Hydroxyl-, Thiol- und/oder primäre und/oder sekundäre Aminogruppen aufweisen. Bewährt haben sich z.B. Polyole ausgewählt aus der Gruppe der Polyetherpolyole, beispielsweise Polytetrahydrofuran, Polyesterpolyole, Polythioether-polyole, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Der Hydroxylzahl der Polyhydroxylverbindungen beträgt dabei in aller Regel 28 bis 850 mg KOH/g und vorzugsweise 35 bis 600 mg KOH/g.

Ferner hat es sich allgemein und insbesondere bei der Herstellung von abriebarmen Polyisocyanat-Polyadditionsprodukten als vorteilhaft erwiesen, Isocyanatgruppen aufweisende Prepolymere einzusetzen. Derartige Prepolymere sind im stand der Technik bekannt. So werden in der EP-A 0 013 487 uretoniminmodifizierte MDI-Prepolymere beschrieben. Die Prepolymere haben NCO-Gehalte von etwa 18 Gew.-%. In der EP-A 0 235 888 werden mikrozellulare Elastomere auf der Basis von Polyesterolen, die Alkanolamine enthalten, beschrieben. Als Isocyanatkomponente dienen Prepolymere aus MDI und den aminhaltigen Polyesteralkoholen mit einem NCO-Gehalt von etwa 18 Gew.-%. In EP-A 0 451 559 werden urethan- und carbodiimidmodifiziertes MDI mit Polyetherolen zu zelligen Polyurethan-Integral-Schäumen umgesetzt. EP-A 0 582 385 beschreibt ein NCO-terminiertes Prepolymer aus MDI und Polyetherolen mit einem NCO-Gehalt von 17 bis 21 Gew.-%, das zu mikrozellularen Elastomeren umgesetzt werden kann. DE-A 16 18 380 beschreibt bei Raumtemperatur flüssige NCO-terminierte Prepolymere aus MDI und verzweigten aliphatischen Dihydroxyverbindungen mit Molekulargewichten bis 700. Der NCO-Gehalt dieser Prepolymeren beträgt 15 bis 25 Gew.-%. WO 91/17197 beschreibt die Herstellung von mikrozellularen Polyurethan-Elastomeren, die beispielsweise für Schuhsohlen verwendet werden. Als Isocyanatkomponente dienen hier Prepolymere aus MDI und Polytetramethylenglykol mit NCO-Gehalten von 7 bis 30 und bevorzugt von 10 bis 22 Gew.-%. Die Lagerstabilität derartiger Prepolymere auf Basis von Polytetramethylenglykol ist allerdings unbefriedigend. In WO 92/22595 werden Prepolymere aus MDI und einer Polyolmischung beschrieben, die aus einem verzweigten Diol oder Triol und mindestens einem 2- bis 4-funktionellem Polyoxyalkylenglykol bestehen. Die NCO-Gehalte der Prepolymeren liegen im Bereich von 15 bis 19 Gew.-%.

Wie in DE 19618392 A1 offenbart, haben sich insbesondere bei abriebarmen Polyisocyanat-Polyadditionsprodukten Prepolymere besonders bewährt, bei denen das Polyol- Polyisocyanat-Verhältnis so gewählt ist, daß der NCO-Gehalt des Prepolymeren > 15 Gew.-%, vorzugsweise > 13 Gew.- % beträgt.

Als Polyolkomponenten werden allgemein, insbesondere für abriebarme Polyisocyanat-Polyadditionsprodukte und für Polyurethanhartschaumstoffe, die gegebenenfalls Isocyanuratstukturen aufweisen können, hochfunktionelle Polyole, insbesondere Polyetherpolyole auf Basis hochfunktioneller Alkohole, Zuckeralkohole und/oder Saccharide als Startermoleküle, für flexible Schäume 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt. Die Herstellung der Polyetherpolyole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Die Polyetherpolyole besitzen eine Funktionalität von vorzugsweise 2 bis 6 und insbesondere 2 bis 4 und Molekulargewichte von 400 bis 3000, vorzugsweise 400 bis 2000.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Als gegenüber Isocyanaten reaktive Verbindungen können gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Polyisocyanat-Polyadditionsprodukten Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der insgesamt eingesetzten gegenüber Isocyanaten reaktiven Verbindungen, zum Einsatz.

Als Treibmittel, insbesondere zur Herstellung von Polyurethanschaumstoffen, können übliche chemisch, beispielsweise Wasser, und/oder physikalisch wirkende Treibmittel verwendet werden. Geeignet sind als solche physikalisch wirkenden Treibmittel Flüssigkeiten, welche gegenüber den organischen, gegebenenfalls modifizierten Polyisocyanaten inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe wie beispielsweise übliche Fluorkohlenwasserstoffe und/oder Chlorkohlenwasserstoffe, wie beispielsweise Dichlormethan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen. Die Treibmittel werden üblicherweise den gegenüber Isocyanaten reaktiven Verbindungen zugesetzt. Sie können jedoch der Isocyanatkomponente oder als Kombination sowohl der Polyolkomponente als auch der Isocyanatkomponente oder Vormischungen dieser Komponenten mit den übrigen Aufbaukomponenten zugesetzt werden. Die eingesetzte Menge des physikalischen wirkenden Treibmittels liegt bevorzugt bei 0,5 bis 25 Gew.-%, besonders bevorzugt 3 bis 15 Gew.-%, jeweils bezogen auf das Gewicht der insgesamt eingesetzten gegenüber Isocyanaten reaktiven Verbindungen. Wird Wasser als Treibmittel verwendet, bevorzugt in einer Menge von 0,5 bis 10 Gew.-% Wasser, besonders bevorzugt in einer Menge von 0,6 bis 7 Gew.-% Wasser, jeweils bezogen auf das Gewicht der insgesamt eingesetzten gegenüber Isocyanaten reaktiven Verbindungen, so wird es bevorzugt der Polyolkomponente zugesetzt.

Als Katalysatoren können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird, Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Der Reaktionsmischung zur Herstellung der Polyisocyanat-Polyadditionsprodukte können gegebenenfalls noch weitere Hilfsmittel und/oder Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen. Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen, angewandt. Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt; anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestem und insbesondere Kohlenstoffasern. Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Isocyanate und dem Gewicht der insgesamt eingesetzten gegenüber Isocyanaten reaktiven Verbindungen, einverleibt, wobei jedoch der Gehalt an Matten, Vliesen und Geweben aus natürlichen und synthetischen Fasern Werte bis 80 Gew.-% erreichen kann.

Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate zur Summe der reaktiven Wasserstoffatome der gegenüber Isocyanaten reaktiven Verbindungen 0,85 bis 1,25 : 1, vorzugsweise 0,95 bis 1,15 : 1 und insbesondere 1 bis 1,05 : 1, beträgt. Falls insbesondere die Polyurethanhartschaumstoffe zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Zur Herstellung der erfindungsgemäßen abriebarmen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate zur Summe der reaktiven Wasserstoffatome der gegenüber Isocyanaten reaktiven Verbindungen 0,85 bis 1,25:1, vorzugsweise 0,95 bis 1,15:1 und insbesondere 1 bis 1,05:1, beträgt.

Als Ausgangsstoffe der erfindungsgemäßen Polyurethan-Elastomeren, insbesondere aus abriebarmen Polyisocyanat-Polyadditionsprodukten, kommen vorzugsweise die üblichen und bekannten Aufbaukomponenten, die auch in offenzelligen Polyurethan-Weichschaumstoffen verwandt werden, zur Anwendung.

Als Polyisocyanate werden (cyclo)aliphatische und/oder insbesondere aromatische Polyisocyanate eingesetzt. Zur Herstellung der erfindungsgemäßen Polyure than-Weichschaumstoffe eignen sich besonders Diisocyanate, vorzugsweise Diphenylmethandiisocyanat (MDI) und Toluylendiisocyanat (TDI). Die Isocyanate können in Form der reinen Verbindung oder in modifizierter Form beispielsweise in Form von Uretdionen, Isocyanuraten, Allophanaten und Biureten, vorzugsweise in Form von Urethan- und Isocyanatgruppen enthaltenden Umsetzungsprodukten , sogenannten Isocyanat-Prepolymeren, eingesetzt werden.

Als Verbindungen mit mindestens zwei mit Isocyanat reaktiven Wasserstoffatomen werden insbesondere Polyole mit einer Funktionalität von 2 bis 4, insbesondere von 2 bis 3, und einem Molekulargewicht von 1000 bis 10000, insbesondere 2000 bis 6000, eingesetzt. Mögliche Polyole sind Polycarbonatdiole, Polyesterole und Polyetherole, wobei die Polyetherole auf Grund ihrer höheren Hydrolysestabilität besonders bevorzugt sind. Die zur Herstellung der erfindungsgemäßen Polyurethan-Weichschaumstoffe verwendeten Polyetherole werden zumeist durch basisch katalysierte Auslagerung von niederen Alkylenoxiden, insbesondere Ethylenoxid und/oder Propylenoxid, an 2 bis 4-fuktionelle, insbesondere2- und 3-funktionelleStartsubstanzen, hergestellt. Als Startsubstanzen dienen insbesondere 2- bis 4-fuktionellle Alkohole mit Molekulargewichten bis 400, zum Beispiel Ethylenglycol, Propylenglyol, Glyzerin, Trimethylopropan, Pentaerythrit. Wie oben ausgeführt, werden zur weiteren Erhöhung der Hydrophilie der Schaumstoffe vorzugsweise Polyetherole mit einem Gehalt an Ethylenoxid, insbesondere in einem Bereich von 10 - 80 Gew.-%, bezogen auf das Gewicht des Polyetherols, eingesetzt.

Zu den Verbindungen mit mindestens zwei mit Isocyanat reaktiven Hydroxylgruppen gehören auch die Kettenverlängerungs- und/oder Vernetzungsmittel bei den Kettenverlängerungsmitteln handelt es sich überwiegend um 2- oder dreifachfunktionelle Alkohole mit Molekulargewichten unter 400, beispielsweise Ethylenglykol, Propylenglykol, Butandiol-1,4, Pentandiol-1,5. Bei den Vernetzungsmitteln handelt es sich um Verbindungen mit Molekulargewichten kleiner 400 und 3 oder mehr aktiven H-Atomen, vorzugsweise Aminen und besonders bevorzugt Alkoholen, beispielsweise Gylzerin, Trimethylopropan und/oder Pentaerythrit.

Die erfindungsgemäßen Elastomere können sowohl in Anwesenheit als auch in Abwesenheit von Kettenverlängerungs- und/oder Vernetzungsmitteln hergestellt werden.

Die erfindungsgemäß geschäumten Elastomere werden unter Verwendung von Treibmittel hergestellt. Als Treibmittel bei der Herstellung der erfindungsgemäßen wird heute zumeist Wasser eingesetzt, welches durch Reaktion mit den Isocyanatgruppen Kohlendioxid bildet, gegebenenfalls ein Gemisch mit sogenannten physikalischen Treibmitteln, inerten Verbindungen, die unter den Bedingungen der Polyurethanbildung verdampfen. Beispiele für physikalische Treibmittel sind (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Die Menge der eingesetzten Treibmittel richtet sich nach der angestrebten Dichte der Schaumstoffe.

Die Herstellung der Elastomere erfolgt zumeist in Anwesenheit von Katalysatoren, beispielsweise tertiären Aminen oder organischen Metallverbindungen, die breits zuvor beschrieben wurden, insbesondere Zinnverbindungen wie Zinnmerkaptit.

Die Umsetzung erfolgt gegebenenfalls in Anwesenheit von Hilfsmitteln und/oder Zusatzstoffen, wie Füllstoffen, Zellreglern, oberflächenaktiver Verbindungen.

Weitere Angaben zu den verwendeten Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage 1983 und 3.Auflage 1993 und in den voranstehenden Ausführungen.

Die Polyisocyanat-Polyadditionsprodukte werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen oder Blockschäumen.

Als besonders vorteilhaft hat es sich erwiesen, nach dem Zweikomponentenverfahren zu arbeiten und die gegenüber Isocyanaten reaktiven Verbindungen, gegebenenfalls das oder die Treibmittel, die Katalysatoren und/oder Hilfs- und/oder Zusatzstoffe in der Komponente (A) zu vereinigen und als Komponente (B) die Isocyanate oder Mischungen aus den Isocyanaten und gegebenenfalls Treibmittel zu verwenden.

Die erfindungsgemäßen Verbindungen bzw. Teilchen (i) und ggf. (ii) werden bevorzugt in dem erfindungsgemäßen Verfahren in Mischung mit der Polyolkomponente, d.h. in Mischung mit gegenüber Isocyanaten reaktiven Verbindungen, beispielsweise in der bereits beschriebenen Komponente A eingesetzt. Die Verbindungen (i) und/oder (ii) können aber abgemischt mit der Komponente (B) eingesetzt werden. Dies trifft auch auf die Teilchen (ii) zu.

Das Gewichtsverhältnis der gegenüber Isocyanaten reaktiven Verbindungen zu Teilchen (i) und ggf. (ii) beträgt bevorzugt 5 : 1 bis 20 : 1.

Es ist für die abriebarmen Polyisocyanat-Polyadditionsprodukte bevorzugt, daß der Index, der das Mischungsverhältnis zwischen Komponente A und Komponente B wiedergibt, zwischen 90 und 100 und bevorzugt zwischen 95 und 99,5 und besonders bevorzugt zwischen 96 und 99 liegt. Im allgemeinen kann die Abriebfestigkeit durch Erhöhung des Index zusätzlich zu der Verwendung der Abriebverbesserer erhöht werden.

Die Ausgangskomponenten werden in Abhängigkeit vom Anwendungsfall bei einer Temperatur von 0 bis 100°C, vorzugsweise von 20 bis 60°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Reaktionstemperatur in dem Formwerkzeug, d.h. die Temperatur, bei die Umsetzung erfolgt, beträgt üblicherweise >20 °C, bevorzugt 40 bis 80 °C.

Nach dem erfindungsgemäßen Verfahren können in Abhängigkeit von den Einsatzstoffen alle üblichen Polyisocyanat-Polyadditionsprodukte, insbesondere aber harte Polyurethanschaumstoffe, die gegebenenfalls Isocyanuratstrukturen aufweisen können, hergestellt werden.

Die nach dem erfindungsgemäßen Verfahren hergestellten Polyurethanhartschaumstoffe weisen üblicherweise eine Dichte von 15 bis 300 kg/m³, vorzugsweise von 20 bis 240 kg/m³ und insbesondere von 25 bis 100 kg/m³, auf Sie eignen sich beispielsweise als Isolationsmaterial im Bau- und Kühlmöbelsektor, z.B. als Zwischenschicht für Sandwichelemente oder zum Ausschäumen von Kühlschrank- und Kühltruhengehäusen, und insbesondere als Schäume, in denen Materialien durch Hineinstecken fixiert werden können, die bevorzugt eine Dichte von 20 bis 50 kg/m³ aufweisen.

Die nach dem erfindungsgemäßen Verfahren hergestellten Polyurethanweichschaumstoffe weisen üblicherweise eine Dichte von 15 bis 100 kg/m³ auf und werden bevorzugt im Möbel- und Automobilbereich eingesetzt, besonders bevorzugt als Polstermaterial.

Bevorzugt werden nach dem erfindungsgemäßen Verfahren Polyurethanhartschaumstoffe, die gegebenenfalls Isocyanuratgruppen enthalten können, hergestellt, da die erfindungsgemäßen Verteile (glatte Oberfläche nach einem Schneiden unter Wärmeeinwirkung sowie keine Staubbildung beim Schneiden) im Falle von Hartschaumstoffen besonders deutlich werden.

Die nach dem erfindungsgemäßen Verfahren hergestellten geschäumten Elastomere weisen üblicherweise eine Dichte von 15 bis 800 kg/m³, vorzugsweise von 20 bis 240 kg/m³ und insbesondere von 25 bis 100 kg/m³, auf. Die nach dem erfindungsgemäßen Verfahren hergestellten kompakten Elastomere weisen üblicherweise eine Dichte von mehr als 800 kg/m³. bevorzugt bis maximal 1200 kg/m³, auf

Ferner kann durch ein erfindungsgemäßes Verfahren die Abriebmenge oder zusätzlich die Shorehärte A bzw. D oder die Dauerbiegebelastung in einem abriebarmen Polyisocyanat-Polyadditionsprodukt oder in einer dieses beinhaltenden Masse eingestellt werden, indem in das Polyisocyanat-Polyadditionsprodukt Teilchen (i) und ggf. (ii) in einem Bereich von 0,1 bis 10 Gew.-%, bezogen auf das Polyisocyanat-Polyadditionsprodukt, eingearbeitet werden.

Erfindungsgemäß besonders bevorzugt ist es in diesem Zusammenhang, die Abriebmenge dadurch zu verringern, indem die Menge der eingesetzten Teilchen (i) und ggf. (ii) erhöht wird.

Es ist erfindungsgemäß bevorzugt, die abriebarmen Polyisocyanat-Polyadditionsaddukte oder kompakten oder geschäumten Elastomere oder abriebarme Massen oder mindestens zwei davon zur Verbesserung des Abriebverhaltens in Gebilden, insbesondere Schäumen, Filmen, Folien, Fasern, Formmassen und Beschichtungen, zu verwenden.

Weiterhin ist es erfindungsgemäß bevorzugt, daß Gebilde ein abriebarmes Polyisocyanat-Polyadditionsprodukt oder ein kompaktes oder geschäumtes Elastomeres oder eine abriebarme Masse oder mindestens zwei davon beinhalten.

Unter den Gebilden besonders bevorzugt sind Schuhsohlen, Autoreifen, Transportbänder, technische Dichtungen und mechanische belastete Rollkörper.

Die Erfindung wird in den nachfolgenden Ausführungsbeispielen näher erläutert.

### Beispiele

### Beispiel 1:

Die in der Tabelle 1 angegebenen A-Komponenten wurden in den einzelnen Beispielen mit Lupranat® M 50 (BASF Aktiengesellschaft) als B-Komponente bei einem Isocyanatindex von 185 intensiv verrührt. Direkt im Anschluß wurden jeweils 50 g in einem Becher mit einem Volumen von 1000 ml gefüllt und zur Reaktion gebracht. Die Angaben in der Tabelle beziehen sich auf Gewichtsteile.

**Tabelle 1 :**

| **Beispiel** | **1 (v)** | **2 (v)** | **3 (e)** | **4 (e)** |
|---|---|---|---|---|
| A-Komponente | | | | |
| AF31-Wachs | - | - | 5 | 10 |
| A-Wachs | - | 10 | - | - |
| Merginat® PV235 | 52 | 52 | 52 | 52 |
| Ricinusöl | 25 | 25 | 25 | 25 |
| Lupranol® 3530 | 18 | 18 | 18 | 18 |
| Tegostab® B 1903 | 0,5 | 0,5 | 0,5 | 0,5 |
| n-Pentan | 11,6 | 11,6 | 11,6 | 11,6 |
| Wasser | 3,5 | 3,5 | 3,5 | 3,5 |
| Lupragen® N206 | 0,13 | 0,13 | 0,13 | 0,13 |
| 20 %-ige Kaliumformiatlösung in Ethylenglykol | 3,7 | 3,7 | 3,7 | 3,7 |
| Lupragen® N 600 | 0,55 | 0,55 | 0,55 | 0,55 |

- (v):: Vergleichsbeispiel,
- (e):: erfindungsgemäßes Beispiel,
- Merginat® PV235:: Polyol, Hydroxylzahl 270 mg KOH/g, Funktionalität 6 (Harburger Fettchemie)
- Lupranol® 3530:: Polyetherpolyol auf der Basis Glycerin/Propylenoxid, Hydroxylzahl 500 (BASF Aktiengesellschaft),
- Tegostab® B 1903:: Stabilisator (Firma Goldschmidt),
- Lupragen® N 206:: Amin-Katalysator (BASF Aktiengesellschaft),
- Lupragen® N 600:: Amin-Katalysator (BASF Aktiengesellschaft),
- AF31-Wachs:: feinstmikronisiertes Polyethylenwachs, 99,9 % kleiner als 32µm, 70 % kleiner als 10µm (BASF Aktiengesellschaft),
- A-Wachs:: Polyethylenwachs, Teilchengröße >1000µm,
- Lupranat® M 50:: Polymer-MDI, NCO-Gehalt 31 %.

Die A-Komponente des Beispiels 2 war nicht stabil, so daß kein Schaum hergestellt werden konnte. Die Reaktionsparameter der Beispiele 1, 3 und 4 sind in der Tabelle 2 dargestellt.

**Tabelle 2**

| Beispiel | 1 (v) | 3 (e) | 4 (e) |
|---|---|---|---|
| Startzeit [s] | 36 | 37 | 35 |
| Abbindezeit [s] | 118 | 120 | 118 |
| Steigzeit [s] | 180 | 165 | 175 |

Zur Beurteilung der Verarbeitbarkeit der Hartschaumstoffe wurden diese mit einem Heizdraht-Schneidegerät (Firma Dingeldein) geschnitten. Die erfindungsgemäß mit den mikronisierten Wachsen hergestellten Hartschaumstoffe zeigten beim Schneiden mit dem Heizdraht keine Staubentwicklung. Die Schnittfläche war angenehm glatt. Im Gegensatz dazu staubte der Hartschaumstoff des Beispiels 1, der ohne mikronisiertes Wachs hergestellt wurde, beim Schneiden mit dem Heizdraht und wies zudem nach dem Schneiden eine unangenehm rauhe, optisch unbefriedigende Oberfläche auf.

### Beispiel 2:

Die unterschiedlichen Abriebverbesserer wurden der Komponente A zugegeben

### Komponente A

- 30 Gew.-Teile: eines trifunktionellen Polyetherols basierend auf Propylenoxid mit einem Ethylenoxidendblock von 21 % mit einer OH-Zahl von 26 mg KOH/g und einer mittleren Funktionalität von 3.
- 57,3 Gew.-Teile: eines difunktionellen Polyetherols basierend auf Propylenoxid mit einem Ethylenoxidendblock von 19 % mit einer OH-Zahl von 28 mg KOH/g und einer mittleren Funktionalität von 2.
- 7,5 Gew.-Teile: Butandiol 1,4
- 4,5 Gew.-Teile: einer 25 %igen Lösung von Dabco in Butandiol 1,4
- 0,2 Gew.-Teile: eines Zinnmerkaptit
- 0,47 Gew.-Teile: Wasser

### Komponente B

Prepolymer 4,4'-NIDI (76 %), einem Polymer MDI (4 %), einem difunktionellen Polyol mit der OHZ 104 basierend auf Propylenoxid (16,5 %) und Dipropylenglykol (6,0 %) und NCO von 20, 5%.

Mit einer Niederdruckverarbeitungsmaschine der Elastogran-Maschinenbau GmbH Typ F 20. wurden die Komponenten bei 25°C vereinigt und zu Testplatten der Größe 20 cm * 20 cm * 1 cm verarbeitet. Einzelheiten sind der nachfolgenden Tabelle 3 zu entnehmen.

**Tabelle 3**

| **Vergleich von verschiedenen Abriebverbesserern** In der Komponente A sind 0,5 % Emulgator enthalten | | | | | | |
|---|---|---|---|---|---|---|
| Vers.-Nr. | A:B=100 | Abriebverb. in A | DIN-Ab.mg | Spezialab. µm | Dauerbiege | Shorehärte A |
| 1 | 104 | 2% AF31 | 246 | 515 | 7,0;4,5;6,5;5,5 | 45 |
| 2 | 106 | 2% AF31 | 143 | 245 | 6,5;7,5;6,0;8,5 | 45 |
| 3 | 108 | 2% AF31 | 134 | 180 | Bruch | 45 |
| 4 | 110 | 2% AF31 | 104 | 145 | Bruch | 45 |
| 5 | 112 | 2% AF31 | 94 | 120 | Bruch | 44 |
| 6 | 102 | 2% AF29 | 128 | 410 | 4,2;5,3;6,0;5,8 | 45 |
| 7 | 104 | 2% AF29 | 98 | 245 | 4,0;4,5;5,2;4,6 | 45 |
| 8 | 106 | 2% AF29 | 84 | 135 | 5,2;4,5;4,4;5,2 | 46 |
| 9 | 108 | 2% AF29 | 70 | 165 | 9,5;6,8;7,8;7,9 | 47 |
| 10 | 110 | 2% AF29 | 59 | 135 | Bruch | 46 |
| 11 | 112 | 2% AF29 | 50 | 110 | Bruch | 44 |
| 12 | 102 | 2% AF32 | 151 | 290 | 7,0;7,1;8,5;7,5 | 43 |
| 13 | 104 | 2% AF32 | 117 | 245 | 4,2;4,3;3,5;3,5 | 45 |
| 14 | 106 | 2% AF32 | 79 | 200 | 5,0;3,6;4,5;6,0 | 47 |
| 15 | 108 | 2% AF32 | 69 | 170 | 5,6;5,8;4,2;7,5 | 47 |
| 16 | 110 | 2% AF32 | 60 | 125 | Bruch | 47 |
| 17 | 112 | 2% AF32 | 55 | 140 | Bruch | 45 |
| 18 (Vgl.) | 102 | 1% Q2 | 40m 100%* | 205 | 4,5;4,5;5,5;4,5 | 43 |
| 19 (Vgl.) | 104 | 1% Q2 | 234 | 185 | 6,5;7,0;8,2;4,5 | 45 |
| 20 (Vgl.) | 106 | 1% Q2 | 124 | 155 | 8,5;5,0;6,5;4,2 | 46 |
| 21 (Vgl.) | 108 | 1% Q2 | 102 | 100 | Bruch | 46 |
| 22 (Vgl.) | 110 | 1% Q2 | 89 | 120 | Bruch | 45 |
| 23 (Vgl.) | 112 | 1% Q2 | 98 | 125 | Bruch | 46 |
| 24 (Vgl.) | 102 | ohne | | | 5,5;5,9;5,6;6,8 | 43 |
| 25 (Vgl.) | 104 | ohne | | | 14,6;4,5;11,7;8,1 | 42 |
| 26 (Vgl.) | 106 | ohne | 100% Abrieb | 580 | Bruch | 43 |
| 27 (Vgl.) | 108 | ohne | 100% Abreib | 475 | Bruch | 44 |
| 28 (Vgl.) | 110 | ohne | 100% Abrieb | 505 | Bruch | 44 |

| | | | | | | |
|---|---|---|---|---|---|---|
| * 100% Abrieb nach 40 m Abriebstrecke | | | | | | |

- "Index" gibt das Verhältnis der Komponente A zur Komponente B beim Verschäumen wieder.
- "Abriebverb. in A" bedeutet der Anteil des Abriebverbesserers in Komponente A.
- "AF-29, AF-31, AF-32" (BASF-Produkt namens Luwax AF (-29, -31, -32).
- "Q2" bedeutet Siliconkautschuk von Dow Corning, im wesentlichen Co-Polymere aus Methoxysilokanpolyoxyalkyl in Glykol als Disperses Silikonadditiv in der Komponente A.
- "DIN-Ab.mg" bedeutet der Abriebverlust in mg bestimmt nach DIN 53516.
- "Spezialab.µm" bedeutet den Abriebverlust gemäß eines Verfahrens, in dem EUEN 344.
- "Dauerbiege" bestimmt nach DIN 53505.
- "Shorehärte A" wurde bestimmt nach DIN 53 505.
- "Dabco" in Butanol 1,4" bezogen von Air Produkts.

## Patentansprüche

1. Verfahren zur Herstellung von abriebsarmen, geschäumten Polyisocyanat-Polyadditionsprodukten durch Umsetzung von Isocyanaten mit gegenüber Isocyanaten reaktiven Verbindungen in Gegenwart von Treibmitteln und ggf. Katalysatoren, Hilfsmitteln und/oder Zusatzstoffen, **dadurch gekennzeichnet, daß** die Umsetzung in Gegenwart von Teilchen (i) mit einer Größe von 2 - 100 µm und einem Schmelzpunkt in einem Bereich von 50 bis 300 °C aus Polyolefinen, ausgewählt aus der Gruppe bestehend aus Polyethylen, Polypropylen sowie deren Copolymeren mit Maleinsäure und/oder Vinylacetat, und/oder Wachsen durchgeführt wird.

2. Verfahren nach Anspruch 1, wobei das Polyadditionsprodukt eine Abriebmenge von unter 250 mg nach DIN 53516 aufweist.

3. Verfahren nach Anspruch 1 oder 2, wobei die Teilchen (i) in Mischung mit gegenüber Isocyanaten reaktiven Verbindungen eingesetzt werden.

4. Verfahren nach einem der Ansprüche 1 bis 3, wobei das Polyadditionsprodukt zusätzlich duroplastische Teilchen (ii) enthält und das Gewichtsverhältnis der gegenüber Isocyanaten reaktiven Verbindungen zu Teilchen (i) und (ii) 5 : 1 bis 300: 1 beträgt.

5. Abriebsarme, geschäumte Polyisocyanat-Polyadditionsprodukte erhältlich nach dem Verfahren gemäß einem der Ansprüche 1 bis 4.

6. Abriebsarme, geschäumte Polyisocyanat-Polyadditionsprodukte nach Anspruch 5 mit mindestens einer der folgenden Eigenschaften:
- Shorehärte A im Bereich von 10 bis 90 oder Shorehärte D im Bereich von 10 bis 60,
- Dauerbiegebelastung im Bereich von 1 bis 8,
- Abriebmenge von unter 250 mg nach DIN 53516.

7. Abriebsarme, geschäumte Polyisocyanat-Polyadditionsprodukte nach Anspruch 5 oder 6 in der Form von Schuhsohlen.

## Claims

1. A process for preparing low-wear, foamed polyisocyanate polyaddition products by reacting isocyanates with compounds which are reactive toward isocyanates, in the presence of blowing agents and if appropriate catalysts, auxiliaries and/or additives, wherein the reaction is carried out in the presence of particles (i) which have a size of 2-100 µm and a melting point in the range from 50 to 300°C and are composed of polyolefins selected from the group consisting of polyethylene, polyproplene and their copolymers with maleic acid and/or vinyl acetate, and/or waxes.

2. The process according to claim 1, wherein the polyaddition product has a wear of less than 250 mg in accordance with DIN 53516.

3. The process according to claim 1 or 2, wherein the particles (i) are used in admixture with compounds which are reactive toward isocyanates.

4. The process according to any of claims 1 to 3, wherein the polyaddition product further comprises thermoset particles (ii) and the weight ratio of the compounds which are reactive toward isocyanates to particles (i) and (ii) is from 5:1 to 300:1.

5. A low-wear, foamed polyisocyanate polyaddition product obtainable according by the process according to any of claims 1 to 4.

6. The low-wear, foamed polyisocyanate polyaddition product according to claim 5 having at least one of the following properties:
- Shore A hardness in the range from 10 to 90 or Shore D hardness in the range from 10 to 60,
- long-term flexural strength in the range from 1 to 8,
- wear of less than 250 mg in accordance with DIN 53516.

7. The low-wear, foamed polyisocyanate polyaddition product according to claim 5 or 6 in the form of a shoe sole.

## Revendications

1. Procédé de préparation de produits de polyaddition de polyisocyanate expansés, peu abrasifs, par réaction d'isocyanates avec des composés réactifs vis-à-vis des isocyanates en présence d'agents moussants et éventuellement de catalyseurs, d'adjuvants et/ou d'additifs, **caractérisé en ce que** la réaction est effectuée en présence de particules (i) ayant une taille de 2-100 µm et un point de fusion de l'ordre de 50 à 300°C, à base de polyoléfines choisies parmi le groupe constitué de polyéthylène, de polypropylène ainsi que de leurs copolymères avec de l'acide maléique et/ou de l'acétate de vinyle, et/ou de cires.

2. Procédé selon la revendication 1, dans lequel le produit de polyaddition présente une quantité d'abrasion inférieure à 250 mg selon la norme DIN 53516.

3. Procédé selon la revendication 1 ou 2, dans lequel les particules (1) sont mises en oeuvre en mélange avec des composés réactifs vis-à-vis des isocyanates.

4. Procédé selon l'une des revendications 1 à 3, dans lequel le produit de polyaddition contient en supplément des particules thermodurcissables (ii) et le rapport pondéral entre les composés réactifs vis-à-vis des isocyanates et les particules (i) et (ii) est de 5/1 à 300/1.

5. Produits de polyaddition de polyisocyanate expansés, peu abrasifs, que l'on peut obtenir avec le procédé selon l'une des revendications 1 à 4.

6. Produits de polyaddition de polyisocyanate expansés, peu abrasifs, suivant la revendication 5, présentant au moins une des propriétés suivantes :
- une dureté Shore A-de l'ordre de 10 à 90 ou une dureté Shore D de l'ordre de 10 à 60,
- une charge de flexion permanente de l'ordre de 1 à 8,
- une quantité d'abrasion inférieure à 250 mg selon la norme DIN 53516.

7. Produits de polyaddition de polyisocyanate expansés, peu abrasifs, suivant la revendication 5 ou 6, sous la forme de semelles de chaussures.
